Europäisches Patentamt

European Patent Office

Office européen des brevets

(19)

(11) Numéro de publication : **0 044 253**
**B1**

(12) **FASCICULE DE BREVET EUROPÉEN**

(45) Date de publication du fascicule du brevet :
13.06.84

(51) Int. Cl.³ : **B 64 G 1/44, H 01 L 25/04**

(21) Numéro de dépôt : **81401110.2**

(22) Date de dépôt : **09.07.81**

(54) Système de repliement et de stabilisation des panneaux solaires.

(30) Priorité : **11.07.80 FR 8015502**

(43) Date de publication de la demande :
**20.01.82 Bulletin 82/03**

(45) Mention de la délivrance du brevet :
**13.06.84 Bulletin 84/24**

(84) Etats contractants désignés :
**DE FR GB**

(56) Documents cités :
**US-A- 3 690 080**
**US-A- 3 756 858**

(73) Titulaire : **AGENCE SPATIALE EUROPEENNE**
**8-10, rue Mario Nikis**
**F-75738 Paris Cedex 15 (FR)**

(72) Inventeur : **Richard, Daniel Clément**
**Dijkgraafstraat 25**
**NL-2241 CJ Wassenaar (NL)**

(74) Mandataire : **Ores, Irène et al**
**CABINET ORES 6, Avenue de Messine**
**F-75008 - Paris (FR)**

## Description

La présente invention est relative à un nouveau système de repliement de panneaux solaires, ainsi qu'à des moyens de stabilisation de ces derniers.

L'une des principales conditions qui seront exigées des panneaux solaires de grandes dimensions de l'avenir, est représentée par leur aptitude à être repliés avant le retour sur terre ou avant une importante opération en orbite.

Conformément à l'Art antérieur, on a utilisé jusqu'à présent, deux types de panneaux solaires flexibles :
— les panneaux du type enroulé, et
— les panneaux du type en accordéon.

Les panneaux solaires du type enroulé sont enroulés autour d'un tambour qui ne peut être fixé qu'au véhicule de lancement en deux points différents, c'est-à-dire aux deux extrémités de l'axe du tambour, ce qui lui donne de l'instabilité. En raison de l'absence d'autres points de fixation, la taille de ce panneau solaire flexible est limitée et, par suite, la puissance engendrée par un tel panneau est généralement inférieure à 5 KW.

En ce qui concerne les panneaux solaires en accordéon, ils peuvent être stockés dans un caisson qui peut aisément être fixé au véhicule de lancement.

Ce type de panneau solaire en accordéon peut comporter trois sortes de systèmes de repliement :
— le système de repliement peut utiliser un panneau non continu à charnières piano,
— le système de repliement peut utiliser un panneau continu plié à intervalles réguliers,
— le système de repliement peut être constitué par la combinaison des deux premiers ; il est connu sous le nom de « système hybride ».

Le premier système de repliement qui utilise des charnières piano, n'est pas très fiable car il requiert un nombre très important de mécanismes actifs ; il est difficile à réparer car chaque sous-panneau introduit une discontinuité dans le câblage électrique ; l'épaisseur des charnières est difficile à adapter à celle du panneau de support, qui n'est que de quelques μ, ce qui entraîne la mise en place d'une installation électrique complexe et fait courir des risques à l'utilisation de cellules ultra-minces.

Le second système de repliement qui utilise un panneau continu, présente des difficultés qui sont essentiellement dues au fait que :
— le pli perd sa mémoire en conséquence des nombreuses contraintes qu'il subit dans la pratique ;
— le pli n'est pas stable lorsqu'on met le panneau de support en compression, ce qui signifie que le panneau de support présente localement une tendance à se replier en sens inverse de celui dans lequel il devrait se plier : une telle tendance soumet les cellules qui se trouvent au voisinage du pli, à des contraintes très élevées qui peuvent entraîner la rupture des cellules ; l'environnement provoque des ondulations permanentes le long de la ligne de pliage, ce qui augmente encore l'instabilité du repliement.

Le troisième système constitué par un panneau non continu comportant des charnières piano qui relient différents sous-panneaux entre eux et dont chacun des sous-panneaux est plié à intervalles réguliers, possède en dépit du fait qu'il facilite la fabrication et l'intégration du panneau, les inconvénients des deux systèmes précédents.

La présente invention a en conséquence pour but de pourvoir à un système de repliement de panneaux solaires qui répond mieux aux nécessités de la pratique que les systèmes de repliement proposés conformément à l'Art antérieur, notamment en ce qu'il s'agit d'un système de repliement simple, qui présente une fiabilité élevée car il ne requiert pas de pièces mécaniques, en ce que ce système de repliement permet de construire des panneaux solaires sans limitation de dimensions, permettant ainsi d'atteindre les puissances de 25 KW-50 KW qui seront nécessaires pour les applications spatiales futures et en ce que les panneaux solaires flexibles, pourvus du système de repliement conforme à l'invention, sont adaptables aux panneaux solaires flexibles conçus conformément aux dispositions de l'Art antérieur.

La présente invention a pour objet de nouveaux systèmes de repliement et de stabilisation de panneaux solaires, appliqués à des panneaux flexibles, continus, de panneaux solaires comportant des lignes de pliage formées à intervalles réguliers, lesquels systèmes de repliement sont caractérisés en ce qu'ils comportent un élément en forme de V dont la rigidité hors du plan est supérieure à celle du panneau plié, lequel élément en forme de V est fixé par l'une de ses extrémités à un côté de la ligne de pliage du panneau et par son autre extrémité, de l'autre côté de la ligne de pliage, la pointe du V étant reliée à la ligne de pliage elle-même à l'aide d'une feuille spéciale dite « tendeur », lesdits systèmes de repliement étant éventuellement associés à des systèmes de stabilisation appropriés desdits panneaux.

Une telle structure, combinant un élément en forme de V, dont les extrémités sont fixées au panneau solaire de part et d'autre de la ligne de pliage, avec une feuille jouant le rôle de tendeur qui relie le sommet intérieur du V directement à la ligne de pliage, procure un système à mémoire positive, ou active.

Suivant une disposition avantageuse de l'invention, chacune des branches de l'élément en forme de V est fixée par son extrémité libre au panneau à une distance b prédéterminée de la ligne de pliage, la largeur de la feuille jouant le rôle de tendeur — calculée du sommet intérieur du V à la ligne de pliage — est égale à B et la longueur de chacune desdites branches est égale à b + B, conférant ainsi des propriétés de déformation à l'élément en forme de V.

En effet, dans un triangle rectangle, la somme des longueurs des côtés de l'angle droit est supérieure à la longueur de l'hypoténuse,

soit

$$b + B > c \qquad (1)$$

et comme

$$c = \sqrt{b^2 + B^2} \qquad (2)$$

d'où

$$b + B > \sqrt{b^2 + B^2} \qquad (3)$$

dans le cas de l'invention

$$b + B = c' \qquad (4)$$

donc

$$c' > \sqrt{b^2 + B^2} \qquad (5)$$

et

$$c' > c \qquad (6)$$

procurant ainsi la déformation recherchée à l'élément en forme de V, laquelle déformation introduit une force de traction F qui est appliquée à la ligne de pliage, par l'intermédiaire du tendeur, pour obliger le panneau solaire à ne se replier que dans une seule et même direction à chaque opération de repliement.

La présente invention vise plus particulièrement les systèmes de repliement et de stabilisation de panneaux solaires conformes aux dispositions qui précèdent, ainsi que les moyens mis en œuvre pour leur réalisation, les panneaux solaires équipés de ces systèmes et les satellites porteurs de panneaux solaires pourvus des systèmes de repliement et de stabilisation conformes à la présente invention.

L'invention sera mieux comprise à l'aide du complément de description qui va suivre, qui se réfère aux dessins annexés dans lesquels :

la figure 1 est une représentation schématique en coupe d'un panneau solaire déployé pourvu d'un système de repliement conforme aux dispositions de l'invention,

les figures 2 et 3 représentent schématiquement, également en coupe, deux opérations de repliement d'un panneau solaire autour d'une linge de pliage, réalisées grâce au système de repliement conforme à l'invention,

la figure 4 est une vue schématique en perspective d'un panneau solaire replié à l'aide du système de repliement conforme à l'invention,

la figure 5 est une représentation schématique d'un autre mode de réalisation du système de repliement conforme à l'invention, et

la figure 6 représente schématiquement un mode de réalisation d'un système de stabilisation d'un panneau solaire qui coopère avec le système de repliement conforme à l'invention.

Il doit être bien entendu, toutefois, que ces dessins et les parties descriptives correspondantes, sont donnés uniquement à titre d'illustration de l'objet de l'invention, dont ils ne constituent en aucune manière une limitation.

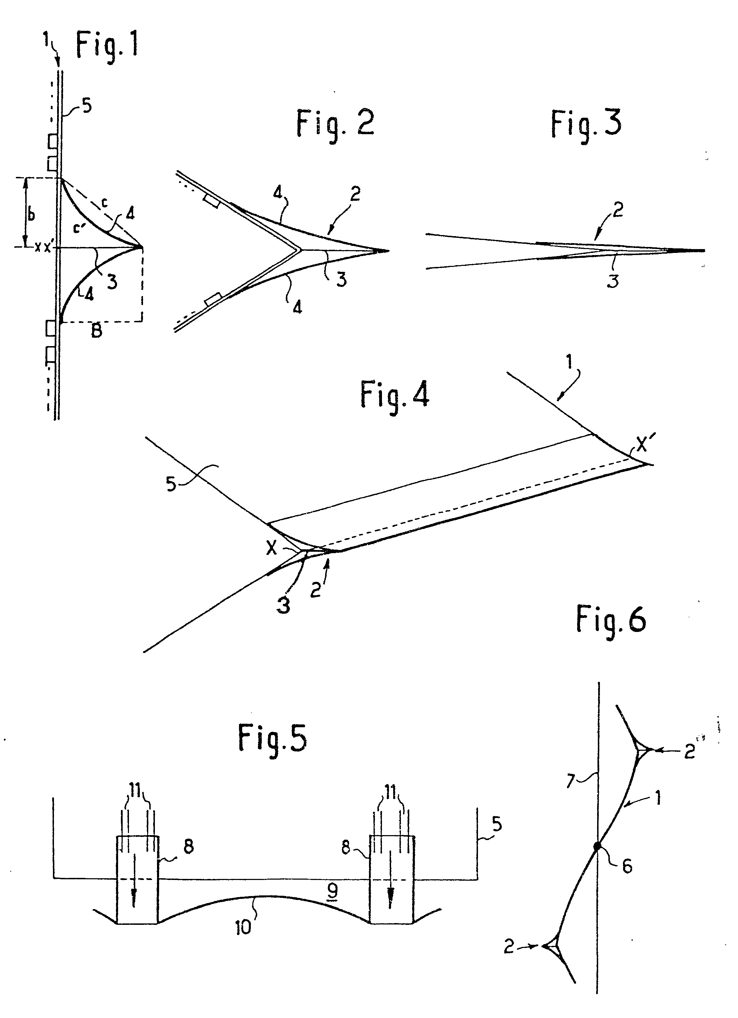

Comme le montre la figure 4, le panneau solaire 1 est plié le long d'une ligne de pliage XX'. Le panneau solaire 1 peut être un panneau solaire connu dans l'Art antérieur, qui comprend une couche de « KAPTON » (Marque déposée par DU PONT DE NEMOURS désignant une résine polyimide), une couche de fibres de verre, des cellules solaires et un câblage électrique. Un élément en forme de V, désigné d'une façon globale par la référence 2, est fixé de part et d'autre de la ligne de pliage XX', à une distance b de cette dernière. La ligne de pliage XX' est reliée au sommet du V par une feuille 3 qui joue le rôle de tendeur et qui sera dénommée ci-après « le tendeur ». Ce tendeur peut avantageusement mais non limitativement, être réalisé en « KAPTON ». La largeur de ce tendeur est égale à B. Chacune des branches 4 de l'élément 2 en forme de V a une longueur égale à b + B, conférant ainsi une courbure à chacune des branches 4. La déformation ainsi conférée aux branches 4 du V, qui est faible et élastique, exerce une force de traction F sur la ligne de pliage XX'. L'élément 2 en forme de V, du fait de sa structure, ne perd pas sa mémoire et du fait de la force de tension F induite dans le tendeur, le panneau solaire 1 ne peut se replier que dans une seule direction.

Cette déformation résulte des équations (1) à (6) ci-dessus, c', qui est la longueur de chacune des branches de l'élément en forme de V étant supérieure à c ou égale à c + ε, la valeur ε étant petite, la déformation de chacune des branches 4 se fait donc dans le domaine élastique et cette déformation est réversible.

Alors que la figure 1 montre le positionnement d'un système de repliement conforme à l'invention sur la face arrière du panneau solaire à l'état déployé, les figures 2, 3 et 4, montrent différentes configurations de repliement dudit panneau autour de la ligne de pliage XX'.

Conformément à l'invention, le panneau solaire pourvu d'un système de repliement conforme à la présente invention, peut également avantageusement être pourvu d'un système de stabilisation dudit panneau en dehors du plan, constitué par un œillet 6 fixé au panneau entre deux lignes de pliage XX' consécutives, avantageusement à mi-distance entre celles-ci, et par un câble 7 qui passe dans ledit œillet. Un tel système de stabilisation a pour rôle d'améliorer la stabilité du panneau solaire en dehors du plan, pour éviter que celui-ci ne se déplace de façon erratique lorsqu'il est déployé, pendant des manœuvres en orbite ou pendant une accélération en orbite. Il peut également être appliqué avec avantage aux tests au sol réalisés avec un panneau solaire déployé.

Le fait que le repliement ne peut se faire que dans une seule direction, la ligne de pliage non seulement conservant sa mémoire, mais étant, en outre, pourvue d'une mémoire « active », élimine les risques de rupture que faisaient courir aux cellules solaires voisines des lignes de pliage, les repliements effectués en sens inverse du sens de pliage correct ; par suite, le nombre de cellules solaires opérationnelles n'est pas réduit en cours de fonctionnement, au voisinage des lignes de pliage. De plus, les systèmes de repliement et de stabilisation proposés conformément à l'invention, n'entraînent aucune limitation de la dimension des panneaux solaires auxquels ils sont associés, en sorte que ces derniers peuvent être réalisés en toutes dimensions désirées. Il en résulte que les puissances élevées nécessaires requises pour les applications futures des panneaux solaires peuvent aisément être atteintes sans difficulté grâce aux dispositions de l'invention.

Selon un mode de réalisation avantageux de l'invention, le câblage électrique placé sur la face arrière du panneau 13 peut être l'un des principaux constituants de l'élément en forme de V ou constituer à lui seul ledit élément.

L'élément en forme de V peut être un élément continu ou discontinu.

Selon une disposition avantageuse de l'invention, l'élément en forme de V 2 et le tendeur 3, sont continus tout le long de la ligne de pliage XX'. Ce mode de réalisation est le plus lourd, mais présente cependant deux avantages essentiels, à savoir que la réalisation du système de repliement conforme à l'invention en tant que système continu permet son utilisation même dans le cas où la rigidité en dehors du plan, du panneau, est élevée et permet de prévoir un câblage électrique continu tout le long de la ligne de pliage, sur la face arrière du panneau.

L'élément en forme de V peut, suivant une autre variante de réalisation, être réalisé sous forme discontinue, comme le montre le schéma de la figure 6, dans lequel l'élément continu en forme de V est remplacé par une pluralité de petits éléments 8 distincts en forme de V, tandis que le tendeur 9 est continu tout le long de la ligne de pliage. A noter la forme particulière du tendeur 7 continu, qui relie les éléments distincts 8 en forme de V entre eux et qui est constitué par une feuille dont l'arête supérieure 10 présente une flèche pour réduire la masse de l'ensemble du système de repliement et pour éliminer les efforts de compression qui pourraient lui être appliqués. Le nombre d'éléments distincts 8 en forme de V est dicté par les caractéristiques du panneau.

Conformément à l'invention, il est avantageux de concentrer le câblage électrique 11 exclusivement dans les éléments distincts 8.

Il résulte de ce qui précède que, quels que soient les modes de réalisation et d'application adoptés, l'on obtient des systèmes de repliement et de stabilisation de panneaux solaires en dehors du plan, qui présentent par rapport aux systèmes visant aux mêmes buts antérieurement connus, un grand nombre d'avantages au nombre desquels il y a lieu de citer :

— le fait qu'il n'y a pas à démanteler le système de repliement pendant le processus d'intégration des cellules solaires ;

— le fait qu'il ne faut tenir compte, pendant la fabrication et l'intégration, que d'un seul point critique représenté par la nécessité de maintenir la ligne de pliage bien droite ;

— le fait que l'ensemble du système est très léger.

Les systèmes de repliement et de stabilisation conformes à la présente invention permettent de résoudre un certain nombre de problèmes que n'avaient pas permis de résoudre les systèmes de repliement proposés dans l'Art antérieur. En effet, le problème posé était de pouvoir plier et replier une mince feuille, à savoir un panneau solaire, le long d'une ligne déterminée, la ligne de pliage, sachant que ladite feuille présentait une instabilité marquée sous l'effet des charges de compression et des charges de cisaillement et qu'elle n'avait pas de mémoire en dehors du plan. La solution proposée conformément à la présente invention, est représentée par un système à mémoire active comportant un élément en forme de V dont la rigidité en dehors du plan est supérieure à celle du panneau solaire plié et qui procure, en association avec le tendeur précité, la mémoire active requise pour des opérations répétées de repliement consécutives à des opérations de déploiement, sans que le système conforme à l'invention perde sa mémoire, en raison de sa structure.

## Revendications

1. Systèmes de repliement et de stabilisation de panneaux solaires (1), appliqués à des panneaux solaires flexibles et continus, comportant des lignes de pliage (XX') formées sur le panneau à intervalles réguliers, lesquels systèmes de repliement sont caractérisés en ce qu'ils comportent un élément en forme de V (2 ou 8) dont la rigidité hors du plan est supérieure à celle du panneau (5) plié, lequel élément en forme de V est fixé par l'une de ses extrémités à un côté de la ligne de pliage (XX') du panneau (5) et par son autre extrémité, de l'autre côté de la ligne de pliage, la pointe du V étant reliée à la ligne de pliage elle-même à l'aide d'une feuille spéciale dite « tendeur » (3), lesdits systèmes de repliement étant éventuellement associés à des systèmes de stabilisation appropriés desdits panneaux.

2. Système de repliement selon la revendication 1, caractérisé en ce que les branches (4) de l'élément en forme de V présentent une cambrure lorsque le panneau est déplié, de manière à exercer une force de traction sur la ligne de pliage (XX').

3. Système selon l'une quelconque des Revendications 1 et 2, caractérisé en ce que chacune des branches (4) de l'élément en forme de V est fixée par son extrémité libre au panneau (5), à une distance b prédéterminée de la ligne de pliage, la largeur de la feuille (3) jouant le rôle de tendeur — calculée du sommet intérieur du V à la ligne de pliage — est égale à B et la longueur de chacune desdites branches est égale à b + B, conférant ainsi des propriétés de déformation à l'élément en forme de V.

4. Système selon l'une quelconque des Revendications 1 à 3, caractérisé en ce que le câblage électrique est placé en totalité sur la face arrière du panneau solaire.

5. Système selon l'une quelconque des Revendications 1 à 4, caractérisé en ce que le câblage électrique forme l'un des principaux constituants de l'élément en forme de V ou l'élément en forme de V lui-même.

6. Système selon l'une quelconque des Revendications 1 à 5, caractérisé en ce que l'élément en forme de V (2) et le tendeur (3) sont continus sur toute la longueur de la ligne de pliage.

7. Système selon l'une quelconque des Revendications 1 à 5, caractérisé en ce que l'élément en forme de V est discontinu en ce qu'il est constitué par une pluralité de petits éléments en forme de V (8), tandis que le tendeur (9) est continu sur toute la longueur de la ligne de pliage et relie les petits éléments en forme de V entre eux.

8. Système selon la Revendication 7, caractérisé en ce que le câblage électrique (11) est concentré dans les éléments en forme de V (8).

9. Système de repliement et de stabilisation selon la Revendication 1, caractérisé en ce que le panneau solaire comprend, en association avec le système de repliement selon l'une quelconque des Revendications 1 à 8, un système de stabilisation du panneau en dehors du plan, qui comprend une pluralité d'œillets (6) disposés sur le panneau de support, entre deux lignes de pliage consécutives, dans lesquels passe un câble en matériau approprié.

10. Système selon la Revendication 9, caractérisé en ce que les œillets (6) sont placés à mi-distance entre deux lignes de pliage consécutives.

## Claims

1. Systems for folding and stabilizing solar arrays (1), applied to flexible and continuous solar arrays, comprising fold lines (XX') formed on the arrays at regular intervals, which folding systems are characterized in that they comprise a V shaped element (2 or 8) whose out of plane rigidity is greater than that of the folded array (5) which V shaped element is fixed by one of its ends to one side of the fold line (XX') of the array (5) and by its other end, to the other side of the fold line, the top of the V being connected to the fold line itself by means of a stretcher (3), said folding systems being if necessary associated with appropriate systems for stabilizing said arrays.

2. The folding system according to claim 1, characterized in that the arms (4) of the V shaped element have a camber when the array is unfolded, so as to exert a pulling force on the fold line (XX').

3. System according to any one of claims 1 and 2, characterized in that each arm (4) of the V shaped element is fixed through its free end to the array (5), at a predetermined distance b form the fold line, the width of the stretcher (3) — calculated from the inner apex of the V to the fold line — is equal to B and the length of each of said arm is equal to b + B, thus conferring deformation properties on the V shaped element.

4. The system according to any one of claims 1 to 3, characterized in that the electric wiring is located entirely on the rear face of the solar array.

5. The system according to any one of claims 1 to 4, characterized in that the electric wiring forms one of the principal components of the V shaped element or the V shaped element itself.

6. The system according to any one of claims 1 to 5, characterized in that the V shaped element (2) and the stretcher (3) are continuous over the whole length of the fold line.

7. The system according to any one of claims 1 to 5, characterized in that the V shaped element is discontinuous in that it is formed from a plurality of small V shaped elements (8), whereas the stretcher (9) is continuous over the whole length of the fold line and connects the small V shaped elements together.

8. The system according to claim 7, characterized in that the electric wiring (11) is concentrated in the V shaped elements (8).

9. The folding and stabilizing system according to claim 1, characterized in that the solar array comprises, in association with the folding system according to any of claims 1 to 8, a system for out of plane stabilization of the array, which comprises a plurality of eyelets (6) disposed on the array, between two consecutive fold lines, through which passes a cable made from appropriate material.

10. The system according to claim 9, characterized in that the eyelets (6) are placed half way between two consecutive fold lines.

## Ansprüche

1. Zusammenfaltungs- und Stabilisationssysteme für Sonnenzellenanlagen (1) zur Anwendung bei flexibelen und kontinuierlichen Sonnenzellen-anlagen, die auf der Anlage in regelmäßigen Abständen ausgebildete Beigelinien (XX') aufweisen, wobei diese Zusammenfaltungssysteme dadurch gekennzeichnet sind, daß sie ein V-förmiges Element (2 oder 8) aufweisen, dessen Steifigkeit aus der Ebene heraus oberhalb derjenigen der gebogenen Anlage (5) ist, wobei dieses V-förmige Element mit seinem einen Ende auf einer Seite der Biegelinie (XX') der Anlage (5) und mit seinem anderen Ende auf der anderen Seite der Biegelinie befestigt ist, wobei ferner die Spitze des V mithilfe eines Spanners (3) mit der Biegelinie selbst verbunden ist, und wobei außerdem diese Zusammenfaltungssysteme eventuell mit geeigneten Stabilisationssystemen für die Anlage verbunden sind.

2. Zusammenfaltungssysteme nach Anspruch 1, dadurch gekennzeichnet, daß die Arme (4) des V-förmigen Elements eine Bogenkrümmung aufweisen, wenn die Anlage ausgebreitet ist, und zwar in der Weise, daß eine Zugkraft auf die Biegelinie (XX') ausgeübt wird.

3. System nach einem der Ansprüche 1 und 2, dadurch gekennzeichnet, daß jeder der Arme (4) des V-förmigen Elements mit seinem freien Ende an der Anlage (5) mit einem vorbestimmten Abstand b von der Biegelinie befestigt ist, wobei die Breite des Spanners (3) — berechnet von der inneren Spitze des V bis zur Biegelinie — gleich B ist, und wobei die Länge von jedem der Arme gleich b + B ist, so daß auf dieser Weise dem V-förmigen Element Deformations-eigenschaften erteilt werden.

4. System nach einem der Ansprüche 1 bis 3, dadurch gekennzeichnet, daß die elektrische Verdrahtung in ihrer Gesamtheit auf der Rückseite der Sonnenzellen-anlagen angeordnet ist.

5. System nach einem der Ansprüche 1 bis 4, dadurch gekennzeichnet, daß die elektrische Verdrahtung einen der Hauptbestandteile des V-förmigen elements oder das V-förmige Element selbst bildet.

6. System nach einem der Ansprüche 1 bis 5, dadurch gekennzeichnet, daß das V-förmige Element (2) und der Spanner (3) über die gesamte Länge der Biegelinie kontinuierlich sind.

7. System nach einem der Ansprüche 1 bis 5, dadurch gekennzeichnet, daß das V-förmige Element insofern diskontinuierlich ist, als es durch eine Mehrzahl von seinen V-förmigen Elementen (8) gebildet wird, während der Spanner (9) über die gesamte Länge der Biegelinie kontinuierlich ist und die kleinen V-förmigen Element miteinander verbindet.

8. System nach Anspruch 7, dadurch gekennzeichnet, daß die elektrische Verdrahtung (11) in den V-förmigen Elementen (8) konzentriert ist.

9. Zusammenfaltungs- und Stabilisationssysteme nach Anspruch 1, dadurch gekennzeichnet, daß die Sonnenzellen-anlagen (1) in Verbindung mit dem Zusammenfaltungssystem nach einem der Ansprüche 1 bis 8 ein System zur Stabilisation der Anlage außerhalb der Ebene umfaßt, welches eine Mehrzahl von Ösen (6) umfaßt, die auf der Anlage zwischen zwei aufeinanderfolgenden Biegelinien vorgesehen sind und in denen ein Kabel aus geeignetem Material verläuft.

10. System nach Anspruch 9, dadurch gekennzeichnet, daß die Ösen (6) in mittiger Entfernung zwischen zwei aufeinanderfolgenden Biegelinien angeordnet sind.

Fig.1

Fig. 2

Fig. 3

Fig. 4

Fig. 6

Fig. 5